(19) Europäisches Patentamt
European Patent Office
Office européen des brevets

(11) EP 0 670 347 B1

(12) # EUROPÄISCHE PATENTSCHRIFT

(45) Veröffentlichungstag und Bekanntmachung des Hinweises auf die Patenterteilung:
**07.10.1998 Patentblatt 1998/41**

(51) Int Cl.$^6$: **C08K 5/54**, C08L 21/00

(21) Anmeldenummer: **95102330.8**

(22) Anmeldetag: **20.02.1995**

(54) **Schwefel-/Silizium-haltige Verstärkungsadditive enthaltende Kautschukmischungen**

Rubber compositions containing reinforcing additives which contain sulfur and silicon

Compositions de caoutchouc contenant des additifs renforcants ayant du soufre et du silicium dans leurs molécules

(84) Benannte Vertragsstaaten:
**BE DE FR GB IT**

(30) Priorität: **03.03.1994 DE 4406947**

(43) Veröffentlichungstag der Anmeldung:
**06.09.1995 Patentblatt 1995/36**

(73) Patentinhaber: **BAYER AG**
**51368 Leverkusen (DE)**

(72) Erfinder:
- **Scholl, Thomas, Dr.**
  **D-51469 Bergisch Gladbach (DE)**
- **Weidenhaupt, Hermann-Josef, Dr.**
  **D-52388 Nörvenich (DE)**
- **Eisele, Ulrich, Dr.**
  **D-51375 Leverkusen (DE)**

(56) Entgegenhaltungen:
**US-A- 4 709 065**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue Schwefel-/Silizium-haltige Verstärkungsadditive enthaltende Kautschukmischungen sowie die Verwendung dieser Kautschukmischungen zur Herstellung von Kautschukvulkanisaten. Die erfindungsgemäßen Kautschukvulkanisate eignen sich zur Herstellung von Formkörpern, insbesondere zur Herstellung von Reifen, die einen geringen Rollwiderstand aufweisen, verbunden mit einem guten Naßrutschverhalten und einer hohen Abriebsfestigkeit.

Vulkanisate mit verbessertem Hystereseverhalten, die auch im Reifenbau eingesetzt werden, sind zwar bekannt, sie besitzen jedoch einige unerwünschte Eigenschaften. So werden in der EP 253 365 bestimmte Nitrosamine beschrieben, die das Hystereseverhalten verbessern sollen jedoch besteht bei diesen Verbindungen die Gefahr der Freisetzung von Nitrosaminen. Es besteht deshalb der Wunsch, nach Kautschukhilfsmitteln, die frei von Nitro- und Nitrosogruppen sind. Ähnliche Bedenken bestehen auch bei den Nitrosoanilinen die gemäß der US-PS 4 690 965 zur Verbesserung des Hystereseverhaltens eingesetzt werden. Aus der EP 366 952 sind weiterhin Kautschukvulkanisate bekannt mit verringerten Hystereseverlusten, die bestimmte Diphenylsulfide enthalten. Nachteilig ist jedoch, daß diese Additive in Naturkautschuk praktisch unwirksam sind und den Naturkautschuk darüberhinaus auch noch abbauen (siehe hierzu US-P 2 470 948). In den deutschen Offenlegungsschriften 2 141 159, 2 141 160 und 2 255 577 sind bestimmte Organosilane als Verstärkungsadditive, insbesondere für kieselsäurehaltige Kautschukvulkanisate beschrieben. Auch in der EP 447 066 wird der Einsatz solcher Organosilane für die Herstellung von Kieselsäuregefüllten Reifenlaufflächen beschrieben. Durch die Kombination von Stoffen auf Kieselsäurebasis und Organosilanen gelang es, den Rollwiderstand der Reifen zu verringern, ohne, wie sonst üblich, die Abriebfestigkeit und die Naßrutschfestigkeit der Reifen zu verschlechtern. Verbesserungswürdig bei den bekannten Organosilanen ist jedoch noch deren Hystereseverhalten sowie deren Verstärkungseffekte, insbesondere das Härteverhalten und der Modul, bei entsprechend verstärkten Kautschuken.

Aus US 4 709 065 sind Schwefel-/Silicium-haltige Verstärkungsadditive für Kautschukmischungen bekannt, die fur technische Gummiartikel Verwendung finden Aus der genannten US-Patentschrift geht jedoch nicht hervor, daß ausgesuchte Schwefel-/Silicium-haltige Verstärkungsadditive bei Einsatz im Reifenbau zu rollwiderstandsarmen Reifen fuhren, mit einem guten Naßrutschverhalten und einer hohen Abriebfestigkeit.

Gegenstand der vorliegenden Erfindung sind daher Kautschukmischung enthaltend mindestens einen Kautschuk, einen Vernetzer, einen Füllstoff, gegebenenfalls weitere Kautschukhilfsmittel sowie mindestens ein Verstärkungsadditiv der Formel

$$R^1R^2R^3Si - X^1 - ( -S_x - Y - )_m - ( - S_x - X^2 - SiR^1R^2R^3)_n \qquad (I),$$

worin

| | |
|---|---|
| $R^1$, $R^2$ und $R^3$ | gleich oder verschieden sind und $C_1$-$C_8$-Alkyl, $C_1$-$C_8$-Alkoxy, Phenyl oder Phenoxy bedeuten, mit der Maßgabe, daß mindestens einer der Reste $R^1$ bis $R^3$ eine Alkoxy- oder Phenoxygruppe ist, |
| $X^1$ und $X^2$ | gleich oder verschieden sind und für zweiwertige, lineare oder verzweigte, gegebenenfalls ungesättigte $C_1$-$C_{12}$-Alkylreste stehen, |
| Y | für gegebenenfalls mit $C_6$-$C_{12}$-Aryl-, $C_1$-$C_8$-Alkoxy oder Hydroxygruppen substituierte zwei-, drei- oder vierwertige lineare verzweigte oder cyclische, gegebenenfalls ungesättigte $C_1$-$C_{18}$-Alkylreste steht, die durch Sauerstoff-, Schwefel- oder Stickstoffatome oder aromatisches $C_6$-$C_{12}$-Gruppen unterbrochen sein können, sowie für $C_6$-$C_{12}$-Arylgruppen oder Heteroarylgruppen steht, |
| m | für eine ganze Zahl von größer als 1 bis 20 steht, |
| n | für eine Zahl von 1 bis 6 steht, und |
| x | eine Zahl von 1 bis 6 bedeutet, |

wobei das Verstärkungsadditiv in Mengen von 0,1 bis 15 Gew.-%, bezogen auf die Menge des jeweils eingesetzten Kautschuks, eingesetzt wird.

Bevorzugt enthalten die erfindungsgemäßen Kautschukmischungen 0,1 bis 10 Gew.-% Verstärkungsadditive, ganz besonders bevorzugt 1 bis 7,5.

Die erfindungsgemäßen Kautschukmischungen enthaltend bevorzugt solche Verstärkungsadditive der obigen Formel, in der X' und $X^2$ Methylen-, Propylen-, Butylen-, Pentylen- oder Hexylenreste bedeuten und Y einen Methylen-, Ethylen-, Propylen-, Butylen-, Hexylen-, Cyclohexylen-, Octylen-, Decyclen-, Dodecylen-, 2,2'-Oxidiethylen-, 2,2'-Thiodiethylen-, 2-Hydroxy-propylen, N-Methyl-N'-N"-diethylen- oder α,α'-p-Xyliden-, 1,2,3-Propyliden-, N,N',N"-Triethylen- oder 1,3,5-s-Triazinylreste darstellen, und worin x ganze Zahlen von 1 bis 6 und m ganze Zahlen von größer als 1 bis 10 bedeuten.

Ganz besonders bevorzugt sind Verstärkungsadditive der folgenden nachstehenden Formeln:

$$(RO)_3Si\,CH_2CH_2CH_2-[S_x-CH_2CH_2]_m-S_x-CH_2CH_2CH_2\,Si\,(OR)_3 \qquad (1)$$

mit

R = $CH_3$, $C_2H_5$,
x = 1 - 6,
m = größer als 1 bis 10

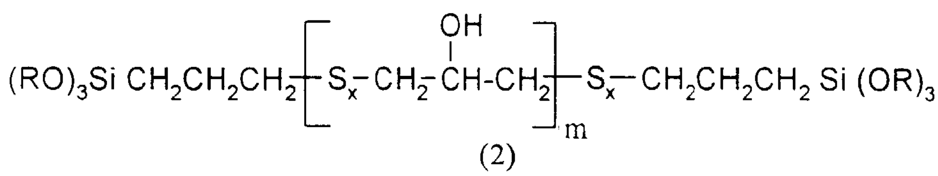

(2)

mit

R = $CH_3$, $C_2H_5$,
x = 1 - 6,
m = größer als 1 bis 10

$$(RO)_3Si\,CH_2CH_2CH_2-[S_x-(CH_2)_6]_m-S_x-CH_2CH_2CH_2\,Si\,(OR)_3 \qquad (3)$$

mit

R = $CH_3$, $C_2H_5$, $C_3H_7$,
m = größer als 1 bis 10
x = 1 - 6,

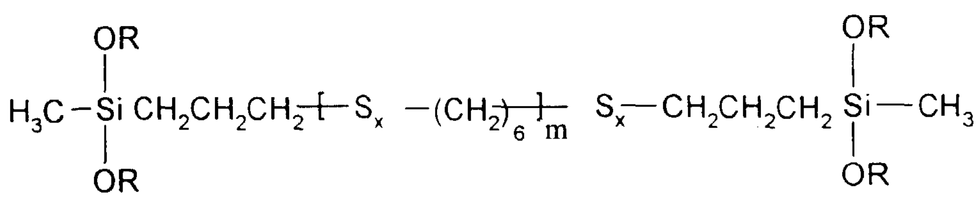

(4)

mit

R = $CH_3$, $C_2H_5$, $C_3H_7$,
m = größer als 1 bis 10
x = 1 - 6,

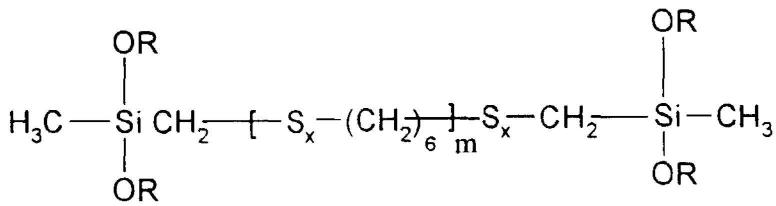

(5)

mit

R = $CH_3$, $C_2H_5$, $C_3H_7$,
m = größer als 1 bis 10
x = 1 - 6,

$$(RO)_3Si-CH_2CH_2CH_2-[S_x-CH_2CH_2OCH_2CH_2]_m-S_x-CH_2CH_2CH_2Si(OR)_3 \quad (6)$$

mit

R = $CH_3$, $C_2H_5$, $C_3H_7$,
x = 1 - 6,

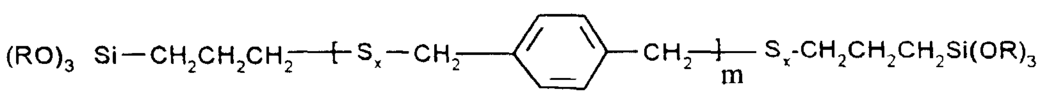

(7)

mit

R = $CH_3$, $C_2H_5$, $C_3H_7$,
m = größer als 1 bis 10
x = 1 - 6,

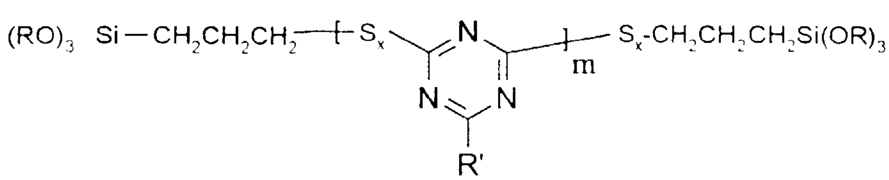

(8)

mit

R = $CH_3$, $C_2H_5$, $C_3H_7$,
R' = $CH_3$, $C_2H_5$, $C_3H_7$, $C_6H_5$
$OCH_3$, $OC_2H_5$, $OC_3H_7$,
$OC_6H_5$
m = größer als 1 bis 10
x = 1 - 6,

$$(RO)_3Si-CH_2CH_2CH_2-[S_x-(CH_2)_6]_r-[S_x-(CH_2)_8]_p-CH_2CH_2CH_2Si(OR_3) \quad (9)$$

$R = CH_3, C_2H_5, C_3H_7$,
$r + p = 2 - 10$,
$x = 1 - 6$,

Insbesondere bevorzugt sind Verstärkungsadditive der folgenden Formeln:

$$(RO)_3Si\ CH_2CH_2CH_2 \!-\!\left[ S_x\text{-}(CH_2CH_2)_6 \right]_n\!-\! S_x - CH_2CH_2CH_2\text{-}Si(OR)_3$$

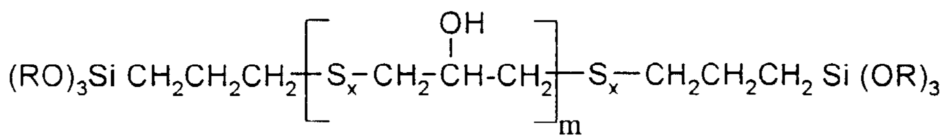

mit X = 1 bis 6 und m = größer als 1 bis 4.

Die erfindungsgemäßen Verstärkungsadditive können sowohl einzeln als auch im Gemisch untereinander eingesetzt werden. Dabei können entweder die einzelnen Verbindungen mit einem definierten Molekulargewicht eingesetzt werden oder als Oligomerengemisch, die eine bestimmte Molekulargewichtsverteilung aufweisen. Aus verfahrenstechnischen Gründen ist es in vielen Fällen einfacher, ein Oligomeren- oder Polymerengemisch der genannten Verstärkungsadditive herzustellen und diese in der oligomeren oder polymeren Form einzusetzen. Werden die Verstärkungsadditive als Oligomere oder Polymere eingesetzt so besitzen diese ein mittleres Molekulargewicht von etwa 500 - 8 000 bestimmt nach Gelpermeationschromatographie.

Die Herstellung der erfindungsgemäßen, neuen Verstärkungsadditive kann auf verschiedene Weise erfolgen:

A) Durch Umsetzung von Mercaptogruppen-haltigen Silanen und Di- und/oder Polymercaptanen mit Schwefeldichlorid oder Di-Schwefeldichlorid unter Abspaltung von HCl. Die Reaktion kann in an sich bekannter Art und Weise bei Temperaturen von -30 bis + 80°C, gegebenenfalls in Gegenwart von Lösungsmitteln, wie Alkoholen oder aromatischen Kohlenwasserstoffen, durchgeführt werden:

$$R^1R^2R^3Si\text{-}X\text{-}SH + HS\text{-}Y\text{-}SH + S_xCl_2 \rightarrow R^1R^2R^3Si\text{-}X\text{-}_{x+2}\text{-}(Y\text{-}S_{x-2})_m\text{-}X\text{-}SiR^1R^2R^3 + HCl$$

Zur Durchführung der Reaktion verweisen wir auf Houben-Weyl, Methoden der organischen Chemie, Band 9, Seite 88 ff. (1955) und Band E 11 (1985), Thieme Verlag, Stuttgart.

B) In besonders vorteilhafter Weise gelingt die Herstellung der eifindungsgemäßen Verstärkungsadditive, wenn man Halogenalkylsilylether und Polyhalogenide mit Metallpolysulfiden in Gegenwart von alkoholischen Lösungsmitteln bei Temperaturen von ca. -20 bis +90°C umsetzt:

$$R^1R^2R^3Si\text{-}X\text{-}Hal + Hal\text{-}Y\text{-}Hal + MeS_x \rightarrow R^1R^2R^3Si\text{-}X\text{-}_x\text{-}(Y\text{-}S_x)_m\text{-}X\text{-}SiR^1R^2R^3 + MeHal$$

Als Metallpolysulfide werden bevorzugt solche eingesetzt, in denen Me für Lithium, Natrium oder Kalium steht und x eine Zahl von 2 bis 6 bedeutet. Als alkoholische Lösungsmittel werden bevorzugt Methanol, Ethanol, Propanol, Butanol, Amylalkohol, Hexylalkahol, Octanol, Ethylenglykol und Propylenglykol, Butandiol und/oder Hexandiol sowie deren Isomeren eingesetzt.

Die erfindungsgemäßen Verstärkungsadditive können sowohl in reiner Form als auch aufgezogen auf einen inerten organischen oder anorganischen Träger, den Kautschukmischungen zugesetzt werden. Als Trägermaterialialien eignen sich insbesondere Kieselsäuren, natürliche oder synthetische Silikate, Aluminiumoxyd sowie Russe.

Als Füllstoffe kommen für die erfindungsgemäßen Kautschukvulkanisate in Frage:

- hochdisperse Kieselsäuren, hergestellt z.B. durch Fällung von Lösungen von Silikaten oder Flammenhydrolyse von Siliciumhalogeniden mit spezifischen Oberflächen von 5-1000, vorzugsweise 20-400 $m^2/g$ (BET-Oberfläche) und mit Primärteilchengrößen von 100-400 nm. Die Kieselsäuren können gegebenenfalls auch als Mischoxide mit

anderen Metalloxiden, wie Al-, Mg-, Ca-, Ba-, Zn-, Zr-, Ti-oxiden, vorliegen,

- synthetische Silikate, wie Aluminiumsilikate oder Erdalkalisilikate, wie Magnesiumsilikat oder Calciumsilikat, mit BET-Oberflächen von 20-400 $m^2/g$ und Primärteilchendurchmessern von 10-400 nm,

- natürliche Silikate, wie Kaolin, oder andere natürlich vorkommende Kieselsäuren,

- Glasfasern und Glasfaserprodukte (Matten, Stränge) oder Mikroglaskugeln.

Bevorzugt werden hochdisperse Kieselsäuren mit BET-Oberflächen von 20-400 $m^2/g$ eingesetzt.

Die obengenannten Füllstoffe werden in Mengen von 0 bis 150 Gew.-%, bevorzugt 10 bis 100 Gew.-%, bezogen auf die Menge des jeweils eingesetzten Kautschuks, eingesetzt. Zusätzlich zu den genannten Füllstoffen können diesen noch Russe zugesetzt werden. Die hierbei zu verwendenden Russe sind nach dem Flammruß-. Furnace- oder Gasruß-Verfahren hergestellt und besitzen BET-Oberflächen von 20-200 $m^2/g$, wie SAF-, ISAF-, IISAF-, HAF-, FEF- oder GPF-Russe.

Die genannten Füllstoffe können alleine oder im Gemisch untereinander eingesetzt werden. In einer besonderen Ausführungsform enthalten die Kautschukmischungen als Füllstoffe ein Gemisch aus hellen Füllstoffen, wie hochdispersen Kieselsäuren, und Russen, wobei das Mischungsverhältnis von hellen Füllstoffen zu Russen bei 0,05 bis 20: 1 bevorzugt 0,1 bis 10:1 liegt. Als Vernetzungsmittel werden für die erfindungsgemäßen Kautschukmischungen eingesetzt: Peroxide, Schwefel, Magnesiumoxid sowie Zinkoxid, denen noch die bekannten Vulkanisationsbeschleuniger, wie Mercaptobenzthiazole, Mercaptosulfenamide, Thiurame und Thiocarbonate zugesetzt werden können. Sowohl die Vulkanisationsbeschleuniger als auch die Vernetzungsmittel können einzeln oder im Gemisch untereinander eingesetzt werden. Besonders bevorzugt wird Schwefel als Vernetzungsmittel eingesetzt. Die Vernetzungsmittel und die Vulkanisationsbeschleuniger werden jeweils in Mengen von 0,1 bis 10 Gew.-%, bevorzugt 0,5 bis 7,5 Gew.-%, bezogen auf den jeweils eingesetzten Kautschuk, eingesetzt.

Den erfindungsgemäßen Kautschukmischungen können selbstverständlich noch weitere Kautschukhilfsprodukte zugesetzt werden, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Reaktionsverzögerer, Metalloxide sowie Aktivatoren, wie Triethanolamin, Polyethylenglykol, Hexantriol, die dem Gummifachmann geläufig sind.

Die genannten Kautschukhilfsmittel werden in üblichen Mengen (0,1 bis 30 Gew.-%, bezogen auf den jeweils eingesetzten Kautschuk), eingesetzt, Die günstigste Menge an Hilfsmittel läßt sich leicht durch Vorversuche ermitteln und richtet sich in übrigen nach dem jeweiligen Verwendunsgzweck der Kautschukvulkanisate.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u.a. Polybutadien, Butadien/Acrylsäure-$C_1$-$C_4$-Alkylester-Copolymere, Polychloropren, Polyisopren, Styrol/Butadien-Copolymerisate mit Styrolgehalten von 1 - 60, vorzugsweise 20 - 50 Gew.-%, Isobutylen/Isopren-Copolymerisate, Butadien/Acrylnitril-Copolymere mit Acrylnitrilgehalten von 5 - 60, vorzugsweise 10 - 50 Gew.-%, teilhydrierter oder vollständig hydrierter Butadie/Acrylnitril-Copolymere sowie Ethylen/Propylen/Dien-Copolymerisate. Selbstverständlich können die Kautschuke auch im Gemisch untereinander eingesetzt werden. Für die Herstellung von Kfz-Reifen sind insbesondere anionisch polymerisierte Lösungs-Styrol/Butadien-Copolymerisate mit einer Glastemperatur oberhalb von 50°C, die gegebenenfalls mit Silylethern oder anderen funktionellen Gruppen, modifiziert sein können, sowie deren Mischungen mit Dienkautschuken von Interesse (siehe beispielsweise EP-A 447 066).

Die Herstellung der Kautschukmischungen erfolgt in üblicher Weise, in bekannten Mischaggregaten, wie Walzen, Innenmischern und Mischextrudern bei Massetemperaturen von 100°C bis 200°C bei Scherraten von 1 bis 1 000 $s^{-1}$.

Die Zugabe der erfindungsgemäßen Verstärkungsadditive sowie die Zugabe der Füllstoffe erfolgt bevorzugt im ersten Teil des Mischprozesses bei Masse-temperaturen von 100 bis 200°C und den erwähnten Scherraten. Sie kann jedoch auch später bei tieferen Temperaturen 40 - 100°C z.B. zusammen mit Schwefel und Vulkanisationsbeschleunigern erfolgen.

Die erfindungsgemäßen Kautschukmischungen können in üblicher Weise vulkanisiert werden (siehe z. B. G. Alliger, I.J. Sjothun, Vulkanization of Elastomeres, Reinhold Publishing Corporation, New York, 1964). Die Vulkanisation wird dabei bei Temperaturen von etwa 100 bis 200°C, bevorzugt bei 130 - 180°C, gegebenenfalls bei Drücken von 10 bis 200 bar, durchgeführt.

Die erfindungsgemäßen Kautschukvulkanisate eignen sich insbesondere zur Herstellung von Formkörpern, z.B. für die Herstellung von Kabelmänteln, Schläuchen, Treibriemen, Förderbändern, Walzen Schuhsohlen, Dichtungsringe und Dämpfungselementen, bevorzugt für die Herstellung von Reifen.

## Beispiele

### Beispiel 1 (Vergleich)

$$(EtO)_3Si\text{-}CH_2CH_2CH_2\text{-}S_4\text{-}CH_2CH_2\text{-}S_4\text{-}CH_2CH_2CH_2\text{-}Si(OEt)_3:$$

47,6 g (0,2 mol) 3-Mercaptopropyl-triethoxisilan und 9,4 g (0.1 mol) 1.2-Dimercaptoethan gelöst in 50 ml absol. Ethanol wurden bei 5-10°C mit 27,0 g (0,2 mol) Dischwefeldichlorid versetzt. Nach 20-stündigem Nachrühren bei Raumtemperatur entfernte man das Lösungsmittel und das gelöste Chlonvasserstoffgas im Vakuum. Man erhielt 69,1 g (99,6 %) eines leicht viskosen, gelben Öls.

$^1$H-NMR ($CDCl_3$): 0,7-0,8 ppm (Multiplett, 4 Protonen) 1,2-1,3 ppm (Triplett, 18 Protonen) 1,8-2,0 ppm (4 Protonen) 2,8-3,1 ppm (Multiplett 4 Protonen), 3,3-3,5 ppm (Multiplett, 4 Protonen), 3,7-3,9 ppm (Quartett, 12 Protonen).

| Elementaranalyse: | | | | | |
|---|---|---|---|---|---|
| | C | H | S | Si | |
| Ber.: | 34,6 | 6,6 | 36,9 | 8,1 | (%) |
| Gef.: | 34,6 | 6,8 | 37,2 | 7,5 | (%) |

### Beispiel 2

$$(EtO)_3Si\text{-}CH_2CH_2CH_2\text{-}S_4\text{-}(\text{-}CH_2CH_2\text{-}S_4\text{-})_2\text{-}CH_2CH_2CH_2\text{-}Si(OEt)_3:$$

47,6 g (0,2 mol) 3-Mercaptopropyl-triethoxisilan und 18,8 g (0,2 mol) 1.2-Dimercaptoethan gelöst in 50 ml absol. Ethanol wurden bei 5-10°C mit 40,5 g (0,3 mol) Dischwefeldichlorid versetzt. Nach 20-stündigem Nachrühren bei Raumtemperatur wurde das Lösungsmittel und das gelöste Chlorwasserstoffgas im Vakuum entfernt, wobei man die Temperatur zum Schluß auf 90°C steigerte. Man erhielt 81 g (98,2 %) eines leicht viskosen, gelben Öls.

| Elementaranalyse: | | | | | |
|---|---|---|---|---|---|
| | C | H | S | Si | |
| Ber.: | 31,1 | 5,9 | 45,2 | 6,6 | (%) |
| Gef.: | 31,1 | 6,1 | 45,0 | 6,8 | (%) |

### Beispiel 3

$$(EtO)_3Si\text{-}CH_2CH_2CH_2\text{-}S_4\text{-}(\text{-}CH_2CH_2\text{-}S_4\text{-})_5\text{-}CH_2CH_2CH_2\text{-}Si(OEt)_3:$$

23,8 g (0,1 mol) 3-Mercaptopropyl-triethoxisilan und 23,5 g (0,25 mol) 1.2-Dimercaptoethan gelöst in 50 ml absol. Ethanol wurden bei 5-10°C mit 40,5 g (0,3 mol) Dischwefeldichlorid versetzt. Man rührte 20 Stunden bei Raumtemperatur nach, wobei sich ein blaßgelber Feststoff abschied. Anschließend entfernte man das Lösungsmittel und das gelöste Chlorwasserstoffgas im Vakuum und steigerte zum Schluß die Temperatur auf 90°C.

### Beispiel 4 (Vergleich)

$$(EtO)_3Si\text{-}CH_2CH_2CH_2\text{-}S_4\text{-}CH_2CH_2CH_2CH_2\text{-}S_4\text{-}CH_2CH_2CH_2\text{-}Si(OEt)_3:$$

In 17 g einer 20 gew-%igen ethanolischen Natriumethylat-Lösung (0,5 mol) leitete man bei Raumtemperatur 8,5 g (0,25 mol) Schwefelwasserstoff ein. Dann gab man 24 g (0,75 mol) Schwefel hinzu und erhitzte 1 Stunde lang auf 70°C. Anschließend tropfte man bei dieser Temperatur 60,1 g (0,25 mol) 3-Chlorpropyltrioxisilan hinzu, rührte eine Stunde bei derselben Temperatur nach und setzte 15,9 g (0,125 mol) 1,4-Dichlorbutan hinzu. Nach 5-stündigem Nachrühren bei Rückflußtemperatur wird filtriert und das Filtrat im Vakuum eingedampft. Man erhielt 85, g (93 %) eines

gelbbraunen Öls.

$^1$H-NMR ($CDCl_3$): 0,7-0,8 ppm (Multiplett, 4 Si-$CH_2$-Protonen) 1,2-1,3 ppm (Triplett, 18-$CH_3$-Protonen) 1,7-2,0 ppm (Multiplett, 8 C-$CH_2$-C-Protonen) 2,7-3,1 ppm (Multiplett, 8 S-$CH_2$-C-Protonen), 3,8-3,9 ppm (Quartett, 12 O-$CH_2$-C-Protonen).

**Beispiel 5 (Vergleich)**

$$(EtO)_3Si\text{-}CH_2CH_2CH_2\text{-}S_4\text{-}CH_2CH_2CH_2CH_2CH_2CH_2\text{-}S_4\text{-}CH_2CH_2CH_2\text{-}Si(OEt)_3:$$

47,6 g (0,2 mol) 3-Mercapto-propyl-triethoxisilan und 15 g (0,1 mol) 1,6-Dimercaptohexan gelöst in 50 ml absol. Ethanol wurden bei 5-10°C mit 27,0 g (0,2 mol) Dischwefeldichlorid versetzt, wobei HCl freigesetzt wurde. Man ließ 20 h bei Raumtemperatur nachrühren und entfernte dann das Lösungsmittel und die gelöste Salzsäure im Vakuum. Man erhielt 73,9 g (98,5 %) eines gelben, niedrigviskosen Öls.

$^1$H-NMR ($CDCl_3$): 0,7-0,8 ppm (Multiplett, Si-$CH_2$-Protonen) 1,2-1,3 ppm (Triplett, $CH_3$-Protonen) 1,4-1,5 ppm (Multiplett, $CH_2$-Protonen) 1,7-2,0 ppm (Multiplett, C-$CH_2$-C-Protonen), 2,6-3,1 ppm (Multiplett, S-$CH_2$-C-Protonen), 3,7-3,9 ppm (Quartett, O-$CH_2$-C-Protonen).

**Beispiel 6**

$$(EtO)_3Si\text{-}CH_2CH_2CH_2\text{-}S_4\text{-}(CH_2CH_2CH_2CH_2CH_2CH_2\text{-}S_4)_2\text{-}CH_2CH_2CH_2\text{-}Si(OEt)_3:$$

47,6 g (0,2 mol) 3-Mercaptopropyl-triethoxisilan und 30,0 g (0,2 mol) 1,6-Dimercaptohexan gelöst in 50 ml absol. Ethanol wurden bei 5-10°C langsam mit 40,5 g (0,3 mol) Dischwefeldichlorid versetzt. Anschließend rührte man 20 h bei Raumtemperatur nach und entfernte dann das Lösungsmittel und die gelöste Salzsäure im Vakuum. Man erhielt 95,2 g (97 %) eines gelben, leicht viskosen Öls.

$^1$H-NMR ($CDCl_3$): 0,7-0,8 ppm (Multiplett, Si-$CH_2$-Protonen), 1,2-1,7 ppm (Triplett, $CH_3$-Protonen), 1,4-1,5 ppm (Multiplett, $CH_2$-Protonen), 1,7-2,0 ppm (Multiplett, -C-$CH_2$-C-Protonen), 3,7-3,9 ppm (Quartett, O-$CH_2$-C-Protonen).

**Beispiel 7**

$$(ETO)_3\text{-}Si\text{-}CH_2CHCH_2\text{-}S\text{-}(CH_2CHOHCH_2\text{-}S_4)_2\text{-}CH_2CH_2CH_2\ Si(OEt)_3:$$

In eine Lösung von 51,0g (0,75 mol) Natriumethylat in 270 ml Ethanol leitete man 12,75 g (0,375 mol) Schwefelwasserstoff ein. Dann setzte man 36 g (1,125 mol) Schwefel hinzu und rührte eine halbe Stunde bei 70°C. Anschließend wurden 60,1 g 3-Chlorpropyl-triethoxysilan zugetropft und eine Stunde nachgerührt. Dann gab man 32,3 g (0,25 mol) 1,3-Dichlor-2-propanol hinzu. Nach 8-stündigem Rühren bei Rückfluß wurde filtriert und das Lösungsmittel im Vakuum entfernt. Man erhielt 108 g eines gelbbraunen Öls.

**Wirksamkeitsprüfung der neuen Verstärkungsadditive in einem $SiO_2$-gefülltem SBR-Vulkanisat**

Die fogende Mischung wurde im Kneter bei 150°C Innentemperatur hergestellt. Schwefel und Beschleuniger wurden auf der Walze bei 50°C nachgemischt. Zur Vulkanisation wurden die Mischungen in beheizbaren Pressen 25 Minuten lang auf 160°C erhitzt.

| Rezeptur | Vergl. 1 | Vergl. 2 | A | B | C |
|---|---|---|---|---|---|
| SBR-Kautschuk (Buna EM 1500) | 70 | 70 | 70 | 70 | 70 |
| SBR-Kautschuk (Buna EM 1778) | 41 | 41 | 41 | 41 | 41 |
| Kieselsäure (Vulkasil S) | 50 | 50 | 50 | 50 | 50 |
| Zinkoxid | 3 | 3 | 3 | 3 | 3 |
| Stearinsäure | 2 | 2 | 2 | 2 | 2 |
| Diethylenglykol | 1,5 | 1,5 | 1,5 | 1,5 | 1,5 |

(fortgesetzt)

| Rezeptur | Vergl. 1 | Vergl. 2 | A | B | C |
|---|---|---|---|---|---|
| Cumaronharz (B2/75) | 5 | 5 | 5 | 5 | 5 |
| Octyliertes Diphenylamin (Vulkanox OCD) | 1 | 1 | 1 | 1 | 1 |
| Bis-triethoxysilylpropyl-tetrasulfid gem. DE-OS 2 255 577 | - | 3,5 | - | - | - |
| Verbindung gem. Beispiel 5 | - | - | 3,5 | - | - |
| Verbindung gem. Beispiel 6 | - | - | - | 3,5 | - |
| Verbindung gem. Beispiel 4 | - | - | - | - | 3,5 |
| Auf der Walze/ 50°C eingemischt: | | | | | |
| Tetramethylthiuramdisulfid | 0,1 | 0,1 | 0,1 | 0,1 | 0,1 |
| Schwefel | 2 | 2 | 2 | 2 | 2 |
| Cyclohexylmercaptobenzithiazolsulfenamid | 1,5 | 1,5 | 1,5 | 1,5 | 1,5 |

Mechanische Eigenschaften des Vulkanisats:

| | | | | | |
|---|---|---|---|---|---|
| Modul 300 (MPa) | 1,37 | 7,49 | 7,69 | 7,93 | 7,4 |
| Festigkeit (MPa) | 12,3 | 17,1 | 12,7 | 14,1 | 17,4 |
| Dehnbarkeit (%) | 911 | 548 | 460 | 488 | 551 |
| Härte (Shore A) | 56 | 64 | 65 | 65 | 65 |
| Elastizität (70°C) | 44 | 60 | 60 | 60 | 60 |
| Abrieb (DIN 53 516) | 279 | - | 139 | 137 | 128 |
| tan delta (60°C) | 0,169 | 0,104 | 0,100 | 0,093 | - |

Die Prüfungen belegen, daß die erfindungsemäßen Verbindungen sehr effektive Verstärkungsadditive sind, ersichtlich am deutlich verbesserten Modul, an der höheren Härte und an dem verbesserten Abriebwiderstand. Die dynamischen Energieverluste, gemessen als tan delta bei 60°C sind deutlich geringer als die des Vulkanisats ohne Verstärkungsadditiv und sogar geringer als mit der Vergleichsverbindung gemäß DE-OS 2 255 577.

## Patentansprüche

**1.** Kautschukmischungen, enthaltend mindestens einen Vernetzer, einen Füllstoff, gegebenenfalls weitere Kautschukhilfsmittel sowie mindestens ein Verstärkungsadditiv der Formel

$$R^1R^2R^3Si - X^1 -(-S_x -Y- )_m - (- S_x - X^2 - SiR^1R^2R^3)_n \quad (I),$$

worin

$R^1$, $R^2$ und $R^3$ gleich oder verschieden sind und $C_1$-$C_8$-Alkyl, $C_1$-$C_8$-Alkoxy, Phenyl oder Phenoxy bedeuten, mit der Maßgabe, daß mindestens einer der Reste $R^1$ bis $R^3$ eine Alkoxy- oder Phenoxygruppe ist,

$X^1$ und $X^2$ gleich oder verschieden sind und für zweiwertige, lineare oder verzweigte, gegebenenfalls ungesättigte $C_1$-$C_{12}$-Alkylreste stehen,

Y für gegebenenfalls mit $C_6$-$C_{12}$-Aryl-, $C_1$-$C_8$-Alkoxy oder Hydroxygruppen substituierte zwei-, drei- oder vierwertige lineare verzweigte oder cyclische, gegebenenfalls ungesättigte $C_1$-$C_{18}$-Alkylreste steht, die durch Sauerstoff-, Schwefel- oder Stickstoffatome oder aromati-

sches $C_6$-$C_{12}$-Gruppen unterbrochen sein können, sowie für $C_6$-$C_{12}$-Arylgruppen oder Heteroarylgruppen steht,

m für eine ganze Zahl von größer als 1 bis 20 steht,

n für eine Zahl von 1 bis 6 steht, und

x eine Zahl von 1 bis 6 bedeutet,

wobei das Verstärkungsadditiv in Mengen von 0,1 bis 15 Gew.-%, bezogen auf die Menge des jeweils eingesetzten Kautschuks, eingesetzt wird

**2.** Verwendung der Kautschukmischungen gemäß Anspruch 1 zur Herstellung von Kautschukvulkanisaten.

**Claims**

**1.** Rubber mixtures containing at least one vulcanising agent, a filler, optionally other rubber additives and at least one reinforcing additive corresponding to the formula

$$R^1R^2R^3Si\text{-} X^1 - (\text{-}S_x - Y \text{-})_m - (\text{-}S_x - X^2 - SiR^1R^2R^3)_n \qquad (I),$$

wherein

$R^1$, $R^2$ and $R^3$ are identical or different and denote $C_1$-$C_8$ alkyl, $C_1$-$C_8$ alkoxy, phenyl or phenoxy, provided that at least one of the groups $R^1$ to $R^3$ is an alkoxy or phenoxy group,

$X^1$ and $X^2$ are identical or different and represent divalent, linear or branched, optionally unsaturated $C_1$-$C_{12}$ alkyl groups,

Y represents divalent, trivalent or tetravalent linear, branched or cyclic, optionally unsaturated $C_1$-$C_{18}$ alkyl groups optionally substituted by $C_6$-$C_{12}$ aryl, $C_1$-$C_8$ alkoxy or hydroxy groups, which can be interrupted by atoms of oxygen, sulfur or nitrogen or by aromatic $C_6$-$C_{12}$ aryl groups, and also represents $C_6$-$C_{12}$ aryl groups or heteroaryl groups,

m represents an integer of greater than 1 to 20,

n represents a number from 1 to 6, and

x denotes a number from 1 to 6,

the reinforcing additive being used in quantities of from 0.1 to 15 wt.%, based on the quantity of rubber used in each case.

**2.** Use of the rubber mixtures according to claim 1 for the production of vulcanised rubbers.

**Revendications**

**1.** Compositions de caoutchoucs contenant au moins un agent réticulant, une matière de charge, le cas échéant d'autres produits auxiliaires pour le caoutchouc et au moins un additif renforçant de formule

$$R^1R^2R^3Si - X^1 - ( \text{-}S_x - Y\text{-})_m\text{-}(\text{-}S_x\text{-}X^2 - SiR^1R^2R^3)_n \qquad (I),$$

dans laquelle

$R^1$, $R^2$ et $R^3$, ayant des significations identiques ou différentes, représentent chacun un groupe alkyle en $C_1$-$C_8$, alcoxy en $C_1$-$C_8$, phényle ou phénoxy, sous réserve qu'au moins un des symboles $R^1$ à $R^3$ représente un groupe alcoxy ou phénoxy,
$X^1$ et $X^2$, ayant des significations identiques ou différentes, représentent chacun un groupe alkyle divalent, linéaire ou ramifié, éventuellement insaturé, en $C_1$-$C_{12}$,
les symboles Y représentent des groupes alkyle di-, tri- ou tétra-valents, linéaires, ramifiés ou cycliques, éventuellement insaturés, en $C_1$-$C_{18}$, éventuellement substitués par des groupes aryle en $C_6$-$C_{12}$, alcoxy en $C_1$-$C_8$ ou hydroxy, et qui peuvent être interrompus par des atomes d'oxygène, de soufre ou d'azote ou par des groupes aromatiques en $C_6$-$C_{12}$, ou bien des groupes aryle en $C_6$-$C_{12}$ ou des groupes hétéroaryle,
m est un nombre entier supérieur à 1 et qui peut atteindre 20,
n est un nombre entier allant de 1 à 6 et
x est un nombre allant de 1 à 6, l'additif renforçant étant mis en oeuvre en quantité de 0,1 à 15 % en poids, par rapport à la quantité du caoutchouc mis en oeuvre dans chaque cas.

**2.** Utilisation des compositions de caoutchoucs selon la revendication 1 pour la fabrication de vulcanisats de caoutchoucs.